# EUROPÄISCHE PATENTANMELDUNG

(11) **EP 4 102 018 A1**
(43) Veröffentlichungstag der Anmeldung: **14.12.2022**
(21) Anmeldenummer: 22174297.6
(22) Anmeldetag: 19.05.2022
(51) Int. Cl.: E05G 1/06, E05G 1/08, B65G 1/04

(54) **TRANSPORTVORRICHTUNG FÜR EINEN TRESORRAUM ZUR EINLAGERUNG VON WERTKASSETTEN**

(30) Priorität: 11.06.2021 DE 102021115155
(71) Anmelder: Gunnebo Markersdorf GmbH, 02829 Markersdorf (DE)
(72) Erfinder: Sigl, Franz, 84034 Landshut (DE)
(74) Vertreter: Lenzing Gerber Stute

(57) **Zusammenfassung**

Die Erfindung betrifft eine Transportvorrichtung (T) zum Transport von Wertkassetten (Kx, Ky) innerhalb eines Lagers (L), insbesondere einem Tresorraum (TR), dadurch gekennzeichnet, dass die Transportvorrichtung (T) dafür ausgelegt ist, mindestens zwei Wertkassetten (Kx, Ky) zur gleichen Zeit zu transportieren.

## Beschreibung

Die vorliegende Erfindung betrifft eine Transportvorrichtung zum Transport von Wertkassetten innerhalb eines Lagers, insbesondere in Form eines Tresorraums.

Es sind Tresorräume bekannt, in denen Wertkassetten in Regalen gelagert sind, und bei denen die Wertkassetten mittels einer Transportvorrichtung, wie sie z.B. auch aus Hochregallagern bekannt sind, zu den Regalfächern transportiert und dort eingebracht sowie von dort zurück zu einer Ein- und Ausgabestelle befördert werden. Dabei weist die Transportanlage stets einen Transportwagen auf, welcher horizontal und vertikal mittels Antrieben vor einem Regal verfahren wird und einen Greifmechanismus sowie eine Aufnahme für eine Wertkassette besitzt. Derartige Tresorräume sind z.B. bei Banken installiert, wobei abgetrennt vom Tresorraum, ein benachbarter Raum angeordnet ist, welcher von Kunden betretbar ist und an dessen zum Tresorraum angrenzender Wand eine Ein- und Ausgabestation angeordnet ist, die über mindestens eine Trennklappe oder Trennwand verfügt, die den Tresorraum vor unerlaubtem Zugang trennt und die nur Wertkassetten passieren lässt bzw. für deren Durchtritt kurzzeitig geöffnet wird. Die dabei entstehende Öffnung ist meist nur genau so groß, dass die Wertkassette gerade hindurchpasst.

Der verfügbare Raum im Tresor soll möglichst effektiv genutzt werden, wobei gleichzeitig ein schnelles Ausgeben und Einlagern der Wertkassetten erfolgen soll. Um möglichst viele Wertkassetten im Tresorraum einlagern zu können, müssen die Regale möglichst dicht beieinander gestellt werden. Hierzu können z.B. zwei Regale unmittelbar nebeneinander aufgestellt werden, wobei dann mittels der Transportvorrichtung durch ein Regal hindurch das von der Transportvorrichtung aus gesehen dahinter angeordnete Regal beschickt wird bzw. von dort Wertkassetten entnommen werden. Nachteilig hierbei ist, dass ein im hinteren Regal befindliche Wertkassette erst dann zum Ausgabestation transportiert werden kann, wenn das davor gelagert Regalfach leer ist bzw. zuvor leergeräumt worden ist, wobei dabei die vordere Wertkassette in ein freies Regalfach umgesetzt werden muss, was Energie- und Zeitaufwendig ist.

In den Tresorraum selbst gelangt z.B. das Wartungspersonal über eine gesonderte Tresorraumtür.

Aufgabe der vorliegenden Erfindung ist es, den Ein- und Ausgabeprozess zu verbessern wobei gleichzeitig eine hohe Anzahl von Wertkassetten im Tresorraum einlagerbar sind.

Diese Aufgabe wird mittels einer Transportvorrichtung mit den Merkmalen des Anspruch 1 erfinderisch gelöst. Weitere vorteilhafte Ausgestaltungen der beanspruchten Transportvorrichtung ergeben sich durch die Merkmale der Ansprüche 2 bis 10. Ebenso wird ein Lagerraum, insbesondere in Form eines Tresorraums beansprucht, welcher über mindestens eine Transportvorrichtung der Ansprüche 1 bis 10 verfügt.

Die erfindungsgemäße Transportvorrichtung zeichnet sich vorteilhaft dadurch aus, dass sie mehrere Aufnahmen für Wertkassetten aufweist, so dass ein Umsetzen von Wertkassetten bei der Einlagerung oder Herausnahme von Wertkassetten die in ein dahinter angeordnetes Regal bzw. Regalfach eingebracht oder aus diesem herausgeholt werden soll, nicht mehr erforderlich ist, da diese Wertkassetten im Transportwagen der Transportvorrichtung zwischengelagert werden können. Sofern mehr als zwei Regale bzw. Regalfächer hintereinander angeordnet werden, welche von ein und derselben Transportvorrichtung beschickt werden, ergibt sich ein umso größerer Zeitvorteil und, da nicht mehr alle bzw. keine der davorliegenden Wertkassetten in ein anderes Regalfach umgesetzt werden müssen bzw. muss, auch ein erheblicher Zeitvorteil. Zudem stehen auch mehr frei verfügbare Regalfächer bereit, mit denen Einnahmen für die das Lager betreibende Einrichtung erzielbar sind. Auch wird die Transportvorrichtung durch weniger notwendige Umplatzierungen von Wertkassetten weniger mechanisch belastet.

So ist es z.B. möglich, mehrere Aufnahmen im Transportwagen übereinander, nebeneinander oder in einer Matrix anzuordnen. Zur Aufnahme der Wertkassetten einer Regalzeile und Regalspalte muss dann lediglich der Transportwagen mit seiner jeweiligen Aufnahme vor das vordere Regalfach dieser Zeile und Spalte gefahren werden.

Selbstverständlich ist es auch möglich mehrere Entnahmevorrichtungen vorzusehen, so dass gleichzeitig mehrere Personen ihre Wertkassetten anfordern und befüllen bzw. Wertsachen entnehmen bzw. die Wertkassetten leeren können.

Nachfolgend werden anhand von Zeichnungen verschiedene mögliche Ausgestaltungen der Erfindung näher erläutert.

Es zeigen:
- Fig. 1:: Draufsicht auf einen Tresorraum mit vier regalreichen und einer Transportvorrichtung;
- Fig. 2:: Querschnittsdarstellung durch den Tresorraum gemäß Figur 1 im Bereich der Spalte Acht;
- Fig. 3a bis Fig. 3i:: Beispiel für das Auslagern einer Wertkassette, die in einem hinteren Regal bzw. Regalfach angeordnet ist;
- Fig. 4:: Alternative Transportvorrichtung mit einem Transportwagen mit zwei horizontal nebeneinander angeordneten Aufnahmen für Wertkassetten;
- Fig. 5:: Tresorraum mit zwei Transportvorrichtungen und einer Übergabeeinrichtung zur Übergabe einer Wertkassetten von einer Transportvorrichtung zur anderen;
- Fig. 6:: weitere mögliche Ausgestaltung eines erfindungsgemäßen Tresorraums mit insgesamt vier Vorräumen, in denen verschiedene Personen gleichzeitig ihre Wertkassetten anfordern können.

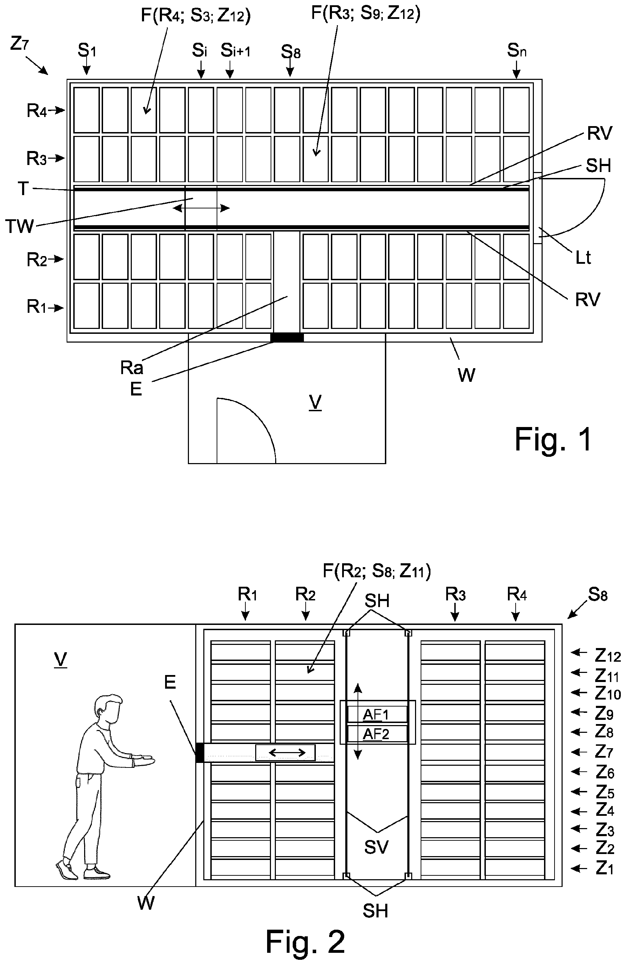

Die Figur 1 zeigt eine Draufsicht auf ein Lager L für Wertkassetten, welcher als Tresorraum ausgebildet ist. Der Tresorraum L ist von einer verstärkten Wandung W umgeben, welche lediglich durch eine Tresortür Lt und eine Eingabeund Ausgabeeinrichtung, im Folgenden Entnahmeeinrichtung E genannt, durchbrochen ist. Dem Tresorraum L ist ein Vorraum vorgelagert, in den Kunden insbesondere überwacht eintreten können, wobei sie danach entweder mittels eines Codes und/oder Schlüssels eine Wertkassette anfordern oder einlagern können. Es ist jedoch auch möglich, dass Wertkassetten Kx, Ky nicht aus dem Tresorraum L und/oder deren Vorraum V herausgenommen werden können, sondern die Wertkassette innerhalb der Entnahmeeinrichtung E verbleibt und dort lediglich geöffnet werden kann.

Es ist selbstverständlich auch möglich, dass einem Lager L mehrere voneinander getrennte Vorräume V mit jeweils einer Entnahmeeinrichtung E zugeordnet ist, wobei dann mehrere Schnittstellen zwischen den Entnahmeeinrichtungen E und der oder den Transportvorrichtungen T vorgesehen sein müssen.

In dem in Figur 1 dargestellten Tresorraum L sind beispielhaft vier Regale R1 bis R4 parallel zueinander angeordnet, wobei jedes Regal R1, ..., R4 in Spalten S1 bis Sn und Zeilen Z1 bis Z12 angeordnete Regalfächer F(Ri, Si, Zi) aufweist. Die Regale R1 und R2 in der Spalte S8 und Zeile Z7 weisen jeweils eine Aussparung und/oder Transporteinrichtung Ra für die Durchgabe von Wertkassetten Kx, Ky von und zu der Transportvorrichtung T und der Entnahmeeinrichtung E auf.

Die Regale R1 und R2 sowie die Regale R3 und R4 sind unmittelbar benachbart zueinander aufgestellt, so dass sich eine große Packungsdichte für die Wertkassetten ergibt. Die für alle gemeinsame Transportvorrichtung T gelangt dabei von der Vorderseite RV der Regale R2 und R3 durch diese hindurch zu den jeweils hinteren Regalen R1 und R4 bzw. deren Regalfächern. Selbstverständlich ist es im Sinne der Erfindung, wenn die Regalfächer der Regalreihen R1 und R2 bzw. R3 und R4 alle Bestandteil von jeweils einem gemeinsamen Regal sind. In diesem Falle würden lediglich zwei Regale zu beiden Längsseiten der Transportvorrichtung T angeordnet sein, welche in jeder Zeile und Spalte jeweils zwei hintereinander angeordnete Regalfächer aufweisen.

Die Transportvorrichtung T weist horizontal verlaufende Schienen Sh auf, an denen vertikal verlaufende Schienen Sv zur vertikalen Führung des Transportwagens TW geführt sind. Selbstverständlich ist es auch möglich, dass lediglich jeweils nur eine horizontale Schiene Sh unten und oben am Regal oder dem Boden und der Decke des Tresorraums zur Führung der mindestens einen vertikalen Schiene Sv vorgesehen sind. Der Transportwagen TW weist, wie in Figur 2 ersichtlich, zwei übereinander angeordnete Aufnahmen AF1 und AF2 zur Aufnahme von Wertkassetten Kx, Ky auf. Selbstverständlich können auch mehr als zwei Aufnahmen je Transportwagen vorgesehen werden. Sofern mehrere Entnahmeeinrichtungen E vorgesehen sind, können auch mehrere Transportwagen TW vorgesehen werden, welche z.B. jeweils nur bestimmten Regalbereichen zugeordnet sind, womit eine noch schnellere Zurverfügungstellung von Wertkassetten möglich ist.

Der Antrieb für den Transportwagen TW, sowie eine Greifereinrichtung und der Aktuator zum Bewegen der Wertkassetten in horizontaler Richtung ist dem Fachmann geläufig und daher nicht dargestellt.

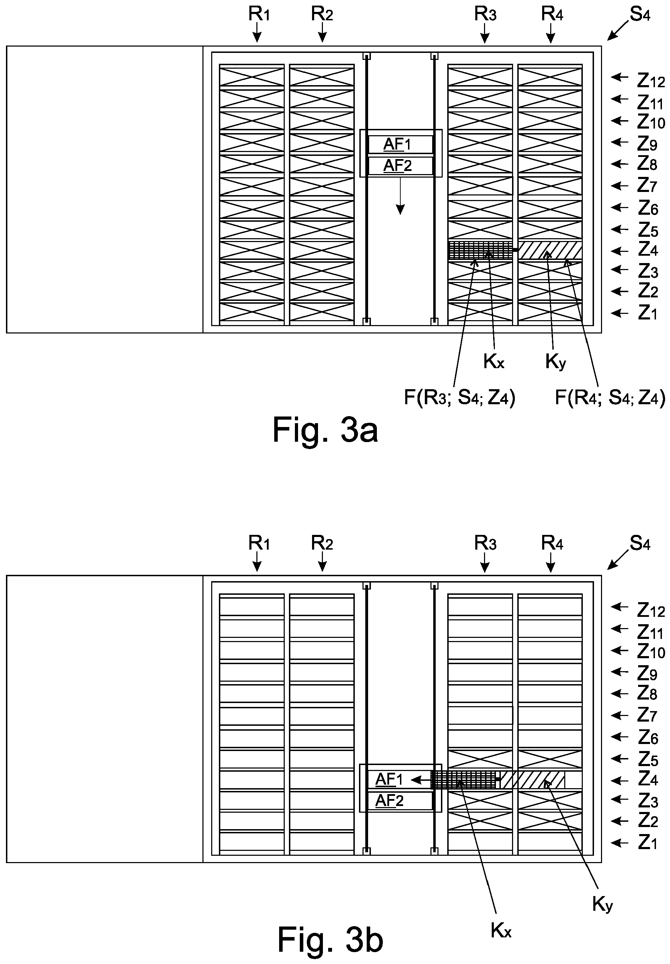

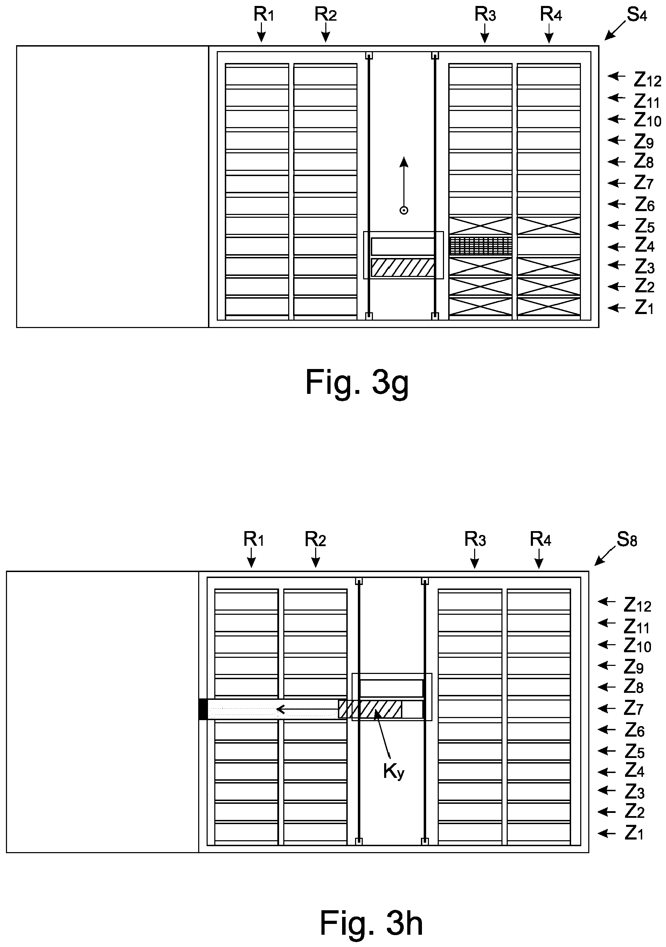

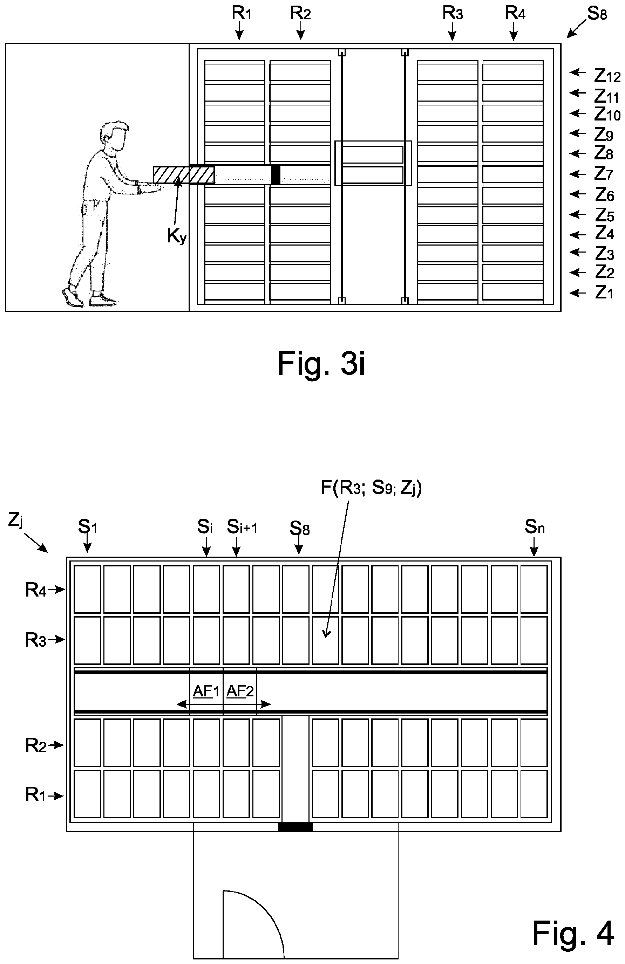

Die Figuren 3a bis 3i zeigen beispielhaft das Auslagern einer Wertkassette Ky aus dem Regalfach F(R4, S4, Z4). Das Regal R4 ist von der Transportvorrichtung T aus hinter dem Regal R3 angeordnet, so dass die Transportvorrichtung T nur über das Regalfach F(R3, S4, Z4) an das dahinter gelegene Regalfach der Wertkassette Ky gelangt. Daher muss die Wertkassette Kx, welche im Regalfach F(R3, S4, Z4) gelagert ist, zunächst in einer Aufnahme des Transportwagens TW zwischengelagert werden, bevor die Wertkassette Ky in eine Aufnahme des Transportwagens TW herausgezogen werden kann. Hierzu wird der Transportwagen TW zunächst mit seiner oberen Aufnahme AF1 vor das Regalfach F(R3, S4, Z4) gefahren (Figur 3a) und die Wertkassette Kx mit der nicht dargestellten Greifereinrichtung in die Aufnahme AF1 befördert (Figur 3b).

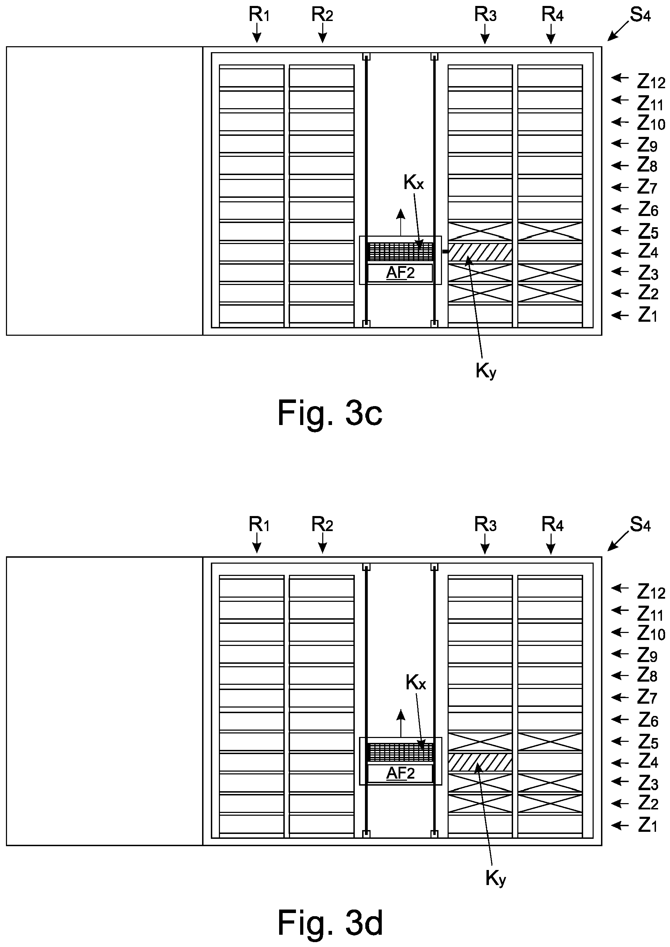

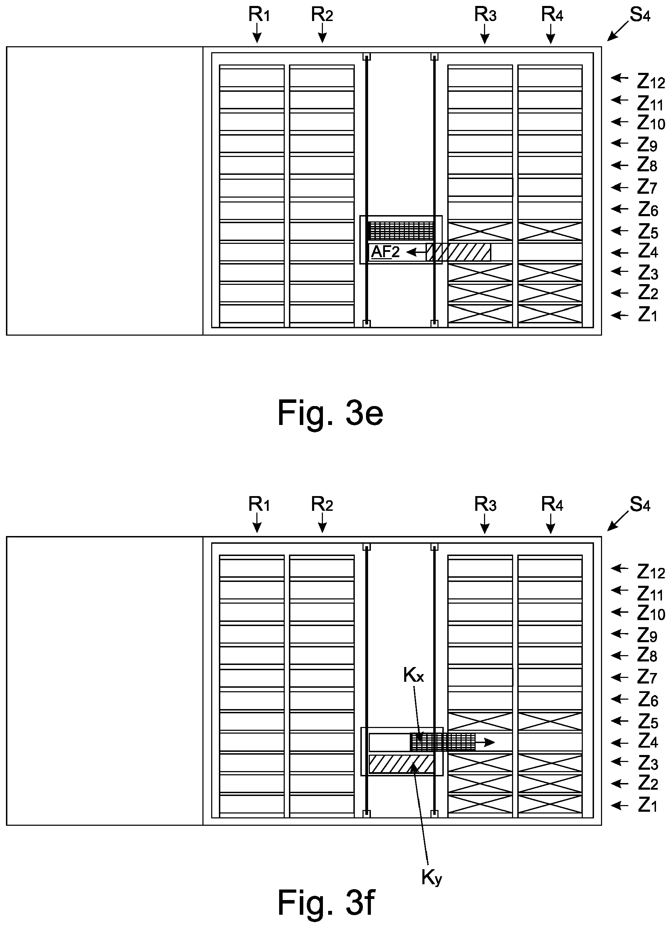

Das Regal und die Wertkassetten können derart ausgebildet sein, dass die hintereinander in der gleichen Spalte und Zeile eingelagerten Wertkassetten miteinander verbunden sind, so dass beim Herausziehen der vorderen Wertkassette Kx gleichzeitig auch die Wertkassette Ky mit aus ihrem Regalfach herausgezogen wird. Der Abstand zwischen Aufnahme AF1, AF2 des Transportwagens TW und dem vorderen Regalfach sollte möglichst gleich sein wie der Abstand zwischen den hintereinander angeordneten Regalfächern. Sobald sich die Wertkassette Kx vollständig in der oberen Aufnahme AF1 befindet, befindet sich dann stets auch die Wertkassette Ky bereits vollständig in dem vorderen Regalfach F(R3, S4, Z4), wonach dann der Transportwagen so bewegt wird (Figur 3c), dass die zuvor miteinander gekoppelten Wertkassetten Kx und Ky voneinander getrennt werden, und danach die Wertkassette Kx vollständig in die Aufnahme AF1 verstellt werden kann. Hierzu wird der Transportwagen so verfahren (Figur 3d), dass die untere Aufnahme AF2 vor das Regalfach F(R3, S4, Z4) gelangt und danach mittels der nicht dargestellten Greifvorrichtung die Wertkassette Ky in die untere Aufnahme AF2 gezogen oder gehoben werden kann (Figur 3e). Danach kann, wie in Figur 3f dargestellt, die Wertkassette KX zurück in das Regal R₃ eingelagert werden, um anschließend - wie in den Figuren 3g bis 3i dargestellt - die Wertkassette Ky zur Entnahmevorrichtung E zu transportierten, so dass deren Inhalt für die im Vorraum V befindliche Person verfügbar ist bzw. die Person etwas in der Wertkassette deponieren kann. Es ist jedoch ebenso möglich, dass die Wertkassette Kx in der oberen Aufnahme AF1 verbleibt und mit dem Transportwagen TW und der Wertkassette Ky zur Entnahmevorrichtung E verfahren wird, wobei dort nur die Wertkassette Ky an die im Vorraum V befindliche Person überbeben wird. Nachdem die Person die Wertkassette Ky wieder verschlossen und der Transportvorrichtung bzw. der Entnahmevorrichtung E übergeben hat, werden beide Wertkassetten Kx und Ky wieder im Tresorraum in den ursprünglichen und/oder anderen Regalfächern eingelagert.

Die Figur 4 zeigt eine alternative Transportvorrichtung T mit einem Transportwagen TW, welcher zwei horizontal nebeneinander angeordneten Aufnahmen AF1, AF2 zum Transport und Zwischenlagern von Wertkassetten aufweist.

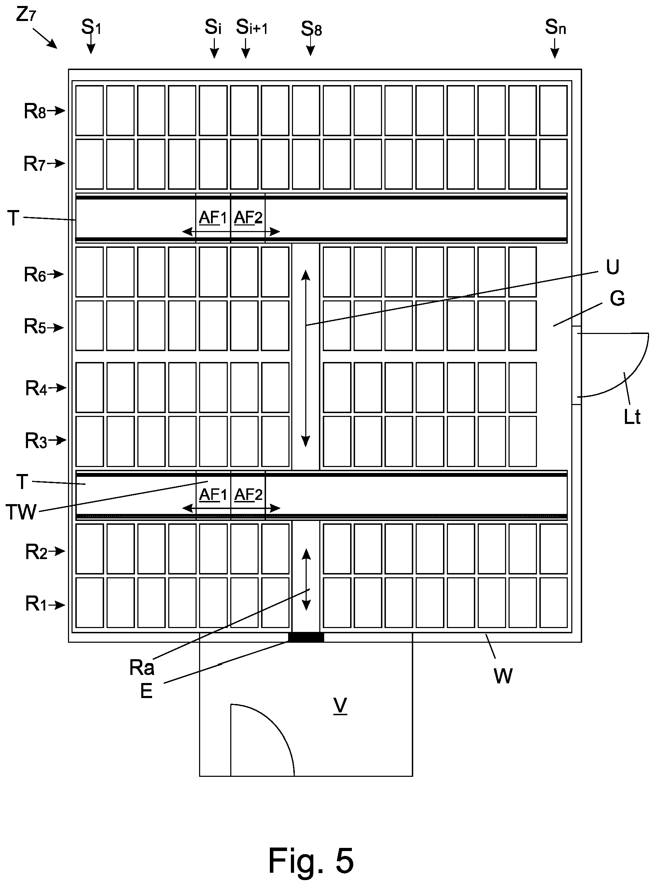

Die Figur 5 zeigt einen alternativen Tresorraum L mit zwei Transportvorrichtungen T und einer Übergabeeinrichtung U zur Übergabe einer Wertkassetten von einer Transportvorrichtung T zur anderen. Bei dieser Ausführungsform sind die vier Regale R3 bis R6 unmittelbar nebeneinander angeordnet, so dass sich eine große Packungsdichte ergibt. Über die Tresortür Lt gelangt das Bank- bzw. Bedienpersonal in den Tresorraum, wobei beide Transportvorrichtungen T über den Gang G erreichbar sind.

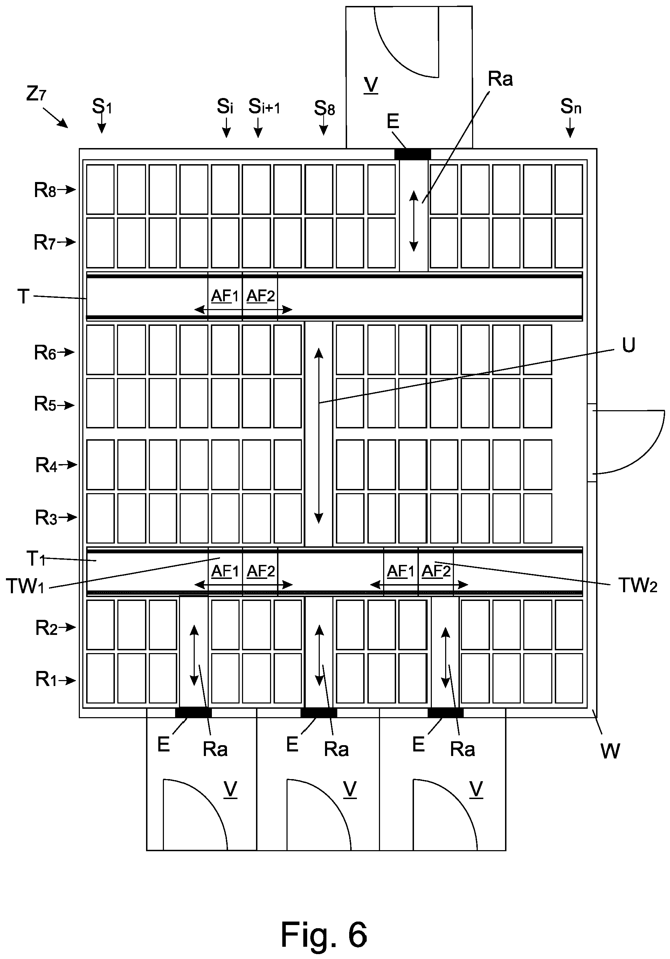

Die Figur 6 zeigt eine Abwandlung des in Figur 5 dargestellten und beschriebenen Tresorraums dar, wobei nunmehr vier Vorräume V vorgesehen sind, in denen Personen nunmehr gleichzeitig ihre Wertkassetten anfordern bzw. bearbeiten können, so dass sich die Wartezeiten für die Personen vorteilhaft reduzieren. Um den Transport der Wertkassetten zu optimieren können z.B. bei der Transportvorrichtung T₁ zwei Transportwagen TW₁ und TW₂ vorgesehen werden.

## Patentansprüche

1. Transportvorrichtung (T) zum Transport von Wertkassetten (Kx, Ky) innerhalb eines Lagers (L), insbesondere einem Tresorraum (TR), **dadurch gekennzeichnet, dass** die Transportvorrichtung (T) dafür ausgelegt ist, mindestens zwei Wertkassetten (Kx, Ky) zur gleichen Zeit zu transportieren.

2. Transportvorrichtung (T) nach Anspruch 1, **dadurch gekennzeichnet, dass** die Transportvorrichtung (T) mindestens einen schienengeführten Transportwagen (TW; TW₁, TW₂) aufweist, der mittels eines Antriebs horizontal und vertikal an mindestens einer Seite (Rv) eines Regals (R) oder zwischen zwei Regalen (R) verfahrbar und vor Regalfächern (F(Rᵢ, Sⱼ, Zₖ)) zur Entnahme und zum Einbringen von Wertkassetten (Kx, Ky) positionierbar ist.

3. Transportvorrichtung (T) nach Anspruch 2, **dadurch gekennzeichnet, dass** der Transportwagen (TW; TW₁, TW₂) eine erste und mindestens eine weitere Aufnahme (AF1, AF2) für jeweils mindestens eine Wertkassette (Kx, Ky) aufweist, wobei insbesondere die Aufnahmen (AF1, AF2) für die Wertkassetten (Kx, Ky) übereinander und/oder nebeneinander angeordnet sind.

4. Transportvorrichtung (T) nach Anspruch 2 oder 3, **dadurch gekennzeichnet, dass** mindestens zwei Aufnahmen (AF1, AF2) für Wertkassetten (Kx, Ky) in Entnahmerichtung (E) hintereinander angeordnet sind.

5. Transportvorrichtung (T) nach einem der Ansprüche 2 bis 4, **dadurch gekennzeichnet, dass** der Transportwagen (TW; TW₁, TW₂) mindestens einen Aktuator (AK) aufweist, mittels dem eine Wertkassette (Kx, Ky) von einem Regalfach (F(Rᵢ, Sⱼ, Zₖ)) zu einer seiner Aufnahmen (AF1, AF2) und andersherum bewegbar ist, wobei insbesondere der Aktuator (AK) einen Greif- oder Koppelmechanismus (G) zum Greifen bzw. zur wahlweisen Verbindung mit einer Wertkassette (Kx, Ky) aufweist.

6. Transportvorrichtung (T) nach einem der Ansprüche 5, **dadurch gekennzeichnet, dass** der Aktuator (AK) derart ausgebildet ist, dass er eine Wertkassette (Kx, Ky) durch mindestens ein vorderes Regalfach (F(Rᵢ, Sⱼ, Zₖ) ) eines ersten Regals (Rᵢ) hindurch in ein oder aus einem dahinter befindlichen Regalfach (F(Rᵢ, Sⱼ, Zₖ)) eines hinter dem vorderen Regal (R) angeordneten zweiten Regals (R) oder des ersten Regals (R) transportieren bzw. entnehmen kann.

7. Transportvorrichtung (T) nach einem der Ansprüche 5 oder 6, **dadurch gekennzeichnet, dass** der Aktuator (AK) einen, insbesondere teleskopartig, ausfahrbaren Greifer (G, G') aufweist, der schmaler als die freie Öffnungsbreite eines Regalfachs (F(Rᵢ, Sⱼ, Zₖ)) ist, derart, dass er mit seinen Greifarmen (GA) eine Wertkassette (Kx, Ky) an deren beiden Längsseiten (KL) umgreifen und mittels Form- und/oder Kraftschluss greifen kann, wobei hierzu die Greifarme (GA) mittels eines Antriebes bewegbar sind.

8. Transportvorrichtung (T) nach einem der vorhergehenden Ansprüche, **dadurch gekennzeichnet, dass** beim Verstellen des Transportwagens (TW, TW1, TW2) eine in einer Aufnahme (AF1, AF2) des Transportwagens einliegende Wertkassette (Kx, Ky) gegen Verrutschen und/oder Herausfallen gesichert ist, insbesondere vom Greifer (G, G') in Position gehalten ist.

9. Transportvorrichtung (T) nach einem der vorhergehenden Ansprüche, **dadurch gekennzeichnet, dass** die Transportvorrichtung (T) eine Steuereinrichtung aufweist.

10. Lager (L), insbesondere in Form eines Tresorraumes (TR), für Wertkassetten (Kx, Ky), mit Regalen (R), in deren Regalfächern (F(Rᵢ, Sⱼ, Zₖ)) die Wertkassetten (Kx, Ky) einlagerbar sind, wobei die Wertkassetten (Kx, Ky) mittels einer Transportvorrichtung (T) nach einem der vorhergehenden Ansprüche zwischen einer Übergabestation (U) bzw. einer Eingabeund Entnahmestation (E) einerseits und den Regalfächern (F(Rᵢ, Sⱼ, Zₖ)) andererseits transportierbar sind.

11. Lager nach Anspruch 10, **dadurch gekennzeichnet, dass** die Regale (R) parallel zueinander in Reihen (Ri) angeordnet sind, wobei jedes Regal (R) in in Zeilen (Zᵢ) und Spalten (Sᵢ) angeordnete Regalfächer (F(Rᵢ, Sⱼ, Zₖ)) aufweist, und mindestens zwei Regale (R) unmittelbar nebeneinander angeordnet sind und/oder mindestens ein Regal (R) mindestens zwei in einer Zeile (Zᵢ) hintereinander angeordnete Regalfächer (F(Rᵢ, Sⱼ, Zₖ)) aufweist.

12. Lager nach Anspruch 11, **dadurch gekennzeichnet, dass** die Transportvorrichtung (T) für das Einbringen und Entnehmen von Wertkassetten (Kx, Ky) in unmittelbar hintereinander in einer Zeile (Zᵢ) und Spalte (Sᵢ) angeordnete Regalfächer (F(Rᵢ, Sⱼ, Zₖ)) ausgebildet ist.

13. Lager (L) nach einem der Ansprüche 10 bis 12, **dadurch gekennzeichnet, dass** mehrere Transportvorrichtungen (T) zwischen Regalen (R) angeordnet sind, wobei insbesondere eine Übergabe einer Wertkassette (Kx, Ky) von einer Transportvorrichtung (T) zur anderen durch mindestens ein Regalfach ((L)) hindurch oder an einem Regal (R) vorbei erfolgt.

14. Lager (L) nach einem der Ansprüche 10 bis 13, **dadurch gekennzeichnet, dass** eine Transportvorrichtung (T) der Eingabe- und Entnahmestation (E) zugeordnet ist, wobei insbesondere der Transport der Wertkassetten (Kx, Ky) von und hin zur Eingabe- und Entnahmestation (E) durch ein Regal (R) oder einer Aussparung (Ra) in einem Regal (R) erfolgt.

15. Lager (L) nach einem der Ansprüche 10 bis 14, **dadurch gekennzeichnet, dass** eine Schutzklappe oder bewegliche Trennwand (TW) vorgesehen ist, die einen für berechtigte Personen betretbaren Vorraum (V) von dem Lager trennt und nur zur Übergabe einer oder mehrerer Wertkassetten (Kx, Ky) bzw. Wertgegenstände oder für den Zugriff auf eine in der Eingabeund Entnahmestation (E) befindliche Wertkassette (Kx, Ky) geöffnet ist.

16. Lager (L) nach einem der Ansprüche 10 bis 15, **dadurch gekennzeichnet, dass** jeder der mindestens einen Entnahmevorrichtung (E) jeweils ein abgetrennter Vorraum (V) zugeordnet ist, in dem eine berechtigte Person die ihr zugeführte Wertkassette ungestört öffnen und befüllen oder leeren kann.

17. Verfahren zum Einlagern und Ausgeben von Wertkassetten (Kx, Ky) in und aus einem Lager (L) nach einem der Ansprüche 10 bis 16, **dadurch gekennzeichnet, dass** zur Entnahme einer über die Eingabe- und Entnahmestation (E) auszugebenden Wertkassette (Kx, Ky), die in einem hinteren Regalfach (F(Rᵢ, Sⱼ, Zₖ)) in einer Zeile (Zᵢ) und in einer Spalte (Sⱼ) eingelagert ist, zunächst die davor in der gleichen Zeile (Zᵢ) und Spalte (Sⱼ) gelagerte(n) Wertkassette(n) (Kx, Ky) in eine bzw. mehrere leere Aufnahme(n) (Ai) des Transportwagens (TW) ausgelagert wird bzw. werden, und, wenn dann noch eine leere Aufnahme (Ai) des Transportwagens (TW) vor die Zeile (Zᵢ) und Spalte (Sⱼ) fahrbar ist, die hintere auszugebende Wertkassette (Kx, Ky) in die freie Aufnahme (Ai) mittels des Aktuators (AK) befördert wird, oder wenn keine leere Aufnahme (Ai) des Transportwagens (TW) vor die Zeile (Zᵢ) und Spalte (Sⱼ) fahrbar ist, zunächst ein Wertkassette (Kx, Ky) in dem Regal in einem Regalfach (F(Rᵢ, Sⱼ, Zₖ)) in einer anderen Spalte und/oder Zeile wieder einzulagern, wonach dann die frei gewordene Aufnahme (Ai) des Transportwagens (TW) zur Entnahme der auszugebenden Wertkassette (Kx, Ky) vor die entsprechende Zeile (Zi) und Spalte (Sj) verfahren und die auszugebende Wertkassette (Kx, Ky) in die Aufnahme (AF1, AF2) transportiert wird, wonach dann die zuvor ausgelagerten Wertkassetten (Kx, Ky) entweder in der jeweiligen Aufnahme verbleiben oder wieder zurück in die Lagerfächer (F(Rᵢ, Sⱼ, Zₖ)) des Regals (R) eingelagert werden, und die auszugebende Wertkassette (Kx, Ky) zur Eingabe- und Entnahmestation (E) befördert wird, wobei die letzten beiden Verfahrensschritt in beliebiger Reihenfolge ausgeführt werden können.
